# EUROPEAN PATENT APPLICATION

(11) **EP 4 838 023 A2**
(43) Date of publication of application: **11.11.2026**
(21) Application number: 26207774.6
(22) Date of filing: 09.10.2024
(51) Int. Cl.: E04C 2/34

(54) **MANUFACTURING OF BUILDING ELEMENTS**

(30) Priority: 10.10.2023 SE 2351163
(62) Document number(s) of the earlier application(s) in accordance with Art. 76 EPC: 24789783.8 / 4 791 975
(71) Applicant: Hybridized AS, 3674 Notodden (NO)
(72) Inventor: Geving, Atle, 3674 Notodden (NO); Liepins, Reinis, 3674 Notodden (NO)
(74) Representative: AWA Sweden AB

(57) **Abstract**

A method of manufacturing an insulated glass unit comprises providing a building element. The building element comprises a polymer film, a first element-surface panel and a second element-surface panel. The polymer film is positioned between the first element-surface panel and the second element-surface panel. The polymer film in the building element is heated (S300) by irradiating (S301) the building element by electromagnetic radiation through the first element-surface panel. Thereby, a shrinkage of the polymer film is induced. A heater section and a production line for manufacturing insulated glass units are also disclosed.

## Description

### TECHNICAL FIELD

The present technology relates in general to manufacturing of elements used for building purposes and in particular methods and arrangement for manufacturing of building elements having incorporated flexible property material.

### BACKGROUND

Today, construction of buildings involves many aspects, for instance, healthy environments, low energy consumption, easy mounting etc. Large efforts are put on producing building elements that enable such requests. Glass building elements, e.g. so-called Insulated Glass Units (IGU), are typical examples of such building elements. In many situations, different aspects, such as transmissivity of visible light, heat radiation and/or ultraviolet light, or antireflex treatments, controllable or not, are combined. Other aspects that may be considered are e.g. sensor technologies, solar cells, alarms etc., which earlier normally were not directly associated with IGU design.

In order to meet such needs, the IGU technology has evolved a lot in recent years. Glass units with more than two panes are today produced as standard products. A disadvantage with such IGUs arise that by involving more glass panes, the weight is also increasing. Today, most technologies to be implemented in IGUs use foils as technology carrier. In order to produce IGUs with these technologies, the foils have to be laminated into glass to obtain necessary stiffness to go through the IGU production.

One way to mitigate this problem is the use thin elements having different functionalities. One way is e.g. to laminate functional foils between glass panes. In other approaches, foils are stretched in frames, positioned between outer glass panes. The handling of the foils for lamination or stretching includes today typically many manual labor elements, which makes such production expensive. Similar problems are also present in many production lines for other types of building elements.

In the published US patent application US 2015/0184447 A1, a multiple-pane insulating glazing unit assembly, gas filling, and pressing machine is disclosed. No equipment for handling functional foils is, however, presented.

In the published US patent application US 2014/0261962 A1, an automated film pickup and placement method for insulating glass units is disclosed. However, there are no indications of implementations of such a method in an insulating glass unit production line.

There is thus a need for improving the production methods for IGUs and for building elements in general.

### SUMMARY

A general object of the present technology is to find a production technique that enables an efficient production of multilayer and multifunctional building elements.

The above object is achieved by methods and devices according to the independent claims. Preferred embodiments are defined in dependent claims.

In general words, in a first aspect, a method of manufacturing an insulated glass unit comprises providing a building element. The building element comprises a polymer film, a first element-surface panel and a second element-surface panel. The polymer film is positioned between the first element-surface panel and the second element-surface panel. The polymer film in the building element is heated by irradiating the building element by electromagnetic radiation through the first element-surface panel. Thereby, a shrinkage of the at least one polymer film is induced.

In a second aspect, a heater section for production of insulated glass units is configured for heating a polymer film held in between a first element-surface panel and a second element-surface panel in a building element. The heater section comprises an electromagnetic radiation source arranged for irradiating the polymer film of the building element by electromagnetic radiation through the first element-surface panel.

In a third aspect, a production line for manufacturing insulated glass units comprises a heater section according to the second aspect.

One advantage with the proposed technology is that multilayer building elements can be produced in a cost-efficient manner. Other advantages will be appreciated when reading the detailed description.

### BRIEF DESCRIPTION OF THE DRAWINGS

The invention, together with further objects and advantages thereof, may best be understood by making reference to the following description taken together with the accompanying drawings, in which:
FIG. 1 is a flow diagram of steps of an embodiment of a method of manufacturing building elements;
FIG. 2 is a schematic illustration of an embodiment of a production line for manufacturing of building elements;
FIG. 3 is a flow diagram of selected steps of another embodiment of a method of manufacturing building elements;
FIG. 4 is a flow diagram of selected steps of an embodiment of a method of manufacturing building elements with gas filling;
FIG. 5 is a schematic illustration of an embodiment of a heating section;
FIG. 6 is a schematic illustration of another embodiment of a heating section;
FIG. 7 is a flow diagram of selected steps of an embodiment of a method of manufacturing building elements with involving heating;
FIG. 8 is a flow diagram of selected steps of yet another embodiment of a method of manufacturing building elements;
FIG. 9 is a schematic illustration of another embodiment of a production line for manufacturing of building elements;
FIG. 10 is a flow diagram of selected steps of yet another embodiment of a method of manufacturing building elements;
FIG. 11 is a flow diagram of selected steps of an embodiment of a method of manufacturing building elements with more than one intermediate layer;
FIG. 12 is a schematic illustration of yet another embodiment of a heating section; and
FIG. 13 is a schematic illustration of yet another embodiment of a heating section

### DETAILED DESCRIPTION

Throughout the drawings, the same reference numbers are used for similar or corresponding elements.

For a better understanding of the proposed technology, it may be useful to begin with a brief overview of some aspects of IGU productions of today.

Fully automated production lines for multi-pane IGUs are available today, in which the glass panes, one after the other, are provided with a spacer frame and primary sealing and pressed together. However, these production lines are relying on that the individual glass panes are mechanically self-bearing.

In order to reduce the weight of the IGU, there are other approaches, where the inner glass panes are exchanged for foils, such as different polymer foils, or for ultrathin glass panes. By this exchange, new difficulties are encountered in that the foils or ultrathin glass panes are typical examples of flexible property materials, which cannot bear their own weight during an automated production. This means that the introduction of such flexible property materials into an IGU calls for manual labor elements, where the application and fastening of the flexible property materials at least to a large extent is made by hand.

In case of utilizing polyetentereftalat (PET) as a base foil to be included in an IGU, such foils are typically somewhat buckled after application to the IGU. This is typically corrected for by heating the IGU after completion, whereby the PET film contracts and thereby becomes flat. However, this heating introduces an increase of the gas pressure inside the IGU, and in order not to break the foils, there must be an open exit between the inside volumes of the IGU and the environment during the heating and cooling procedures. A final sealing has therefore to be performed after the finalized heating process. This heating process and the following sealing takes a lot of time which makes the production slow and costly. It is also difficult to control the quality of the effect caused by the heating.

Manufacturing of other types of multi-panel building elements presenting structure-forming outer panels and flexible property material foils inside the outer panels have similar production problems.

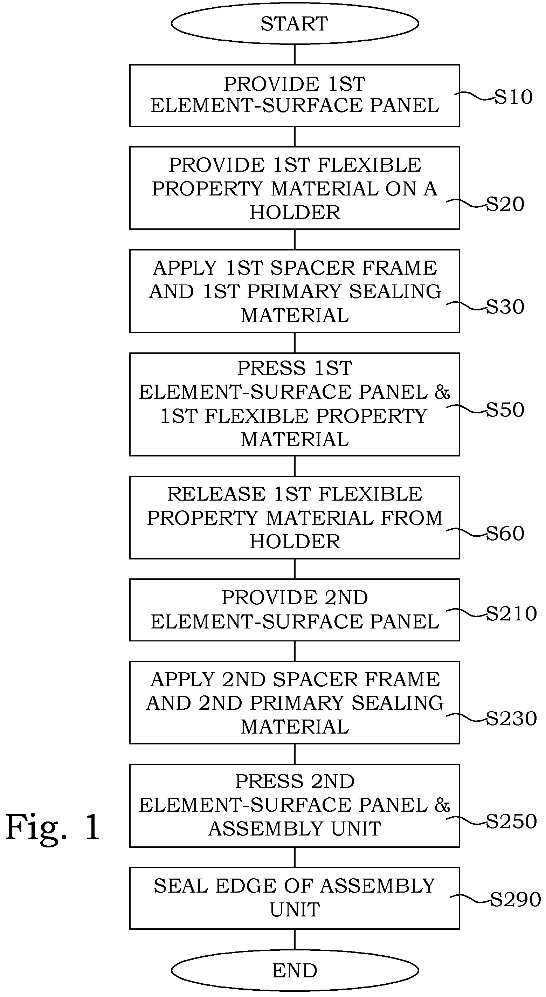

The present technology offers solutions to these problems. Figure 1 is a flow diagram of steps of an embodiment of a method of manufacturing building elements. In step S10, a first element-surface panel is provided. The element-surface panel is intended to form an outer surface of the final building element. In other words, one surface of the element-surface panel is intended to be one of the outer surfaces of the final building element. In step S20, a first flexible property material is provided on a holder. The flexible property material is a soft or flexible foil or film or a solid material that has a thickness-to-area aspect ratio that makes it difficult to handle, as such, without breakage. Typically, the flexible property material is a polymer film, an ultrathin glass, a metal foil and/or fabrics. In many cases, the flexible property material is provided on a roll. The holder is configured for maintaining the flexible property material in an at least essentially flat shape in a releasable manner.

In other words, a flexible property material is a material that can be bent, shaped or compressed/stretched within certain limits without breaking. The flexible property material will typically return to its original state and shape when external support or mechanical forces, that were used to obtain required shapes, are removed. The flexible property material cannot obtain required shapes without action of external mechanical forces.

In step S30, a first spacer frame and a first primary sealing material is applied between a first side of the first element-surface panel and a first side of the first flexible property material. In step S50, the first element-surface panel and the first flexible property material are pressed together. Thereby, a seal is created therebetween, comprising the first spacer frame. By this an assembly unit is created. In step S60, the first flexible property material is released from the holder. The flexible property material is now maintained in its at least essentially flat shape by the seal to the first element-surface panel.

In step S210, a second element-surface panel is provided. In step S230, a second spacer frame and a second primary sealing material are applied between a first side of the second element-surface panel and a flexible property material side of the assembly unit. In step S250, the second element-surface panel and the assembly unit are pressed together. Thereby, a seal is created therebetween comprising the second spacer frame. This results in that the assembly unit is provided with element-surface panels on both outer surfaces.

In step S290, an edge of the assembly unit is sealed by a secondary sealing material, thereby forming the final building element.

The use of a holder for the flexible property material forms a composite unit that enables handling as a stable self-bearing unit. The application of spacers and the primary seal can then be performed according to conventional method used for e.g. full-thickness glass panes. The holder is in other words present in the pressing process and releases the flexible property material only when the pressing is completed, resulting in a bond of the flexible property material to a more stable part of the final building element. When the sealing process is finalized, the bond between the holder and the flexible property material can be removed and the flexible property material is continuously kept in place by the spacer. The holder can then be re-used for a next sheet of flexible property material.

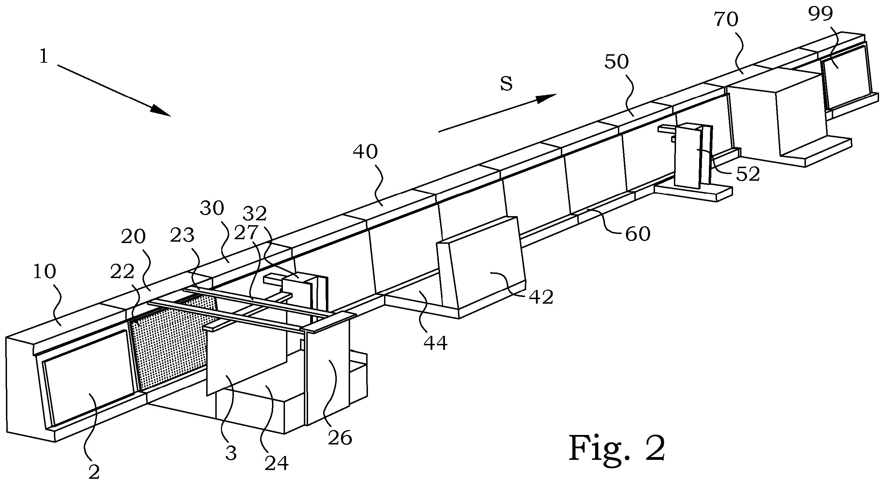

Figure 2 is a schematic illustration of an embodiment of a production line 1 for manufacturing of building elements 99. A panel providing section 10 is configured for providing element-surface panels 2. The element-surface panels 2 are placed on a panel transport means 60. The provision of element-surface panels 2 can be performed according to any procedure used as such in prior art. A person skilled in the art is therefore well-aware of how to provide such a panel providing section 10. The details of this panel providing section 10 may be configured according to standard equipment used, as such, in IGU production lines of today. The present ideas are not dependent on the details of how this panel providing section 10 is configured, as long as element-surface panels 2 are provided in such a way that they become transportable by the panel transport means 60.

A flexible property material providing section 20 is configured for providing flexible property material 3 attached to a holder 22. The holder 22 is configured for controllable release of the flexible property material 3.

In the embodiment of Figure 2, the flexible property material providing section 20 comprises a loading table 24. arranged for supporting a sheet of the flexible property material 3 in a horizontal position. Here, the flexible property material 3 can be cut into the requested size and shape. Further detailed modifications of the flexible property material 3, such as venting openings, connection of connectors to functional coatings, or provision of aesthetical marks can be performed depending on the type of flexible property material 3 and its intended functionality. A foil transporting means 26 is arranged for moving the flexible property material 3 from the top of the loading table 24 to the holder 22. In the particular embodiment of Figure 2, the foil transporting means 26 comprises a lifting yoke 27 with clamping means for gripping the flexible property material 3. The lifting yoke 27 is displaced along two rails 23 between the loading table 24 and the holder 22.

In other embodiments, other means for transporting the foils may be employed, for instance using different kinds of robots. Also manually supported transporting of the foils to the holder 22 is feasible.

Also in other embodiments, a pretreatment of the foils, e.g. cutting in appropriate sizes, may take place also before entering the loading table 24 or provided directly to the holder 22.

In yet another embodiment, the loading table 24 may also be used as the holder 22. The flexible property material is then preferably applied to the holder 22, positioned as a loading table 24. After possible corrections, cuts etc., the flexible property material is attached firmly to the holder/loading table 22/24 and the entire ensemble is lifted onto the panel transport means 60 as a holder 22.

In a process view, a flexible property material 3 is placed on the loading table 24 and cuttings or other modifications may be performed if requested and necessary. The lifting yoke 27 is moved to the loading table and the flexible property material 3 is gripped and lifted by the lifting yoke 27. The flexible property material 3 hanging from the lifting yoke 27 is transported along the rails 23 to the holder 22, where the flexible property material 3 is placed on the surface of the holder 22.

In the present embodiment, the panel transport means 60 is configured for transporting the holder 22 in an essentially vertical position. However, in other embodiments, the production line could be designed differently, e.g. with horizontal movement of the holder 22 and the element-surface panels 2. Also, in the present embodiment, the attachment of the flexible property material 3 to the holder 22 takes place when the holder 22 is placed at the panel transport means 60. However, in alternative or complementary embodiments, the attachment process may be performed when the holder 22 is placed elsewhere, e.g. somewhat offset from the panel transport means 60. This would enable the panel transport means 60 to be used for other types of transports during the time of attachment of the flexible property material 3 to the holder 22.

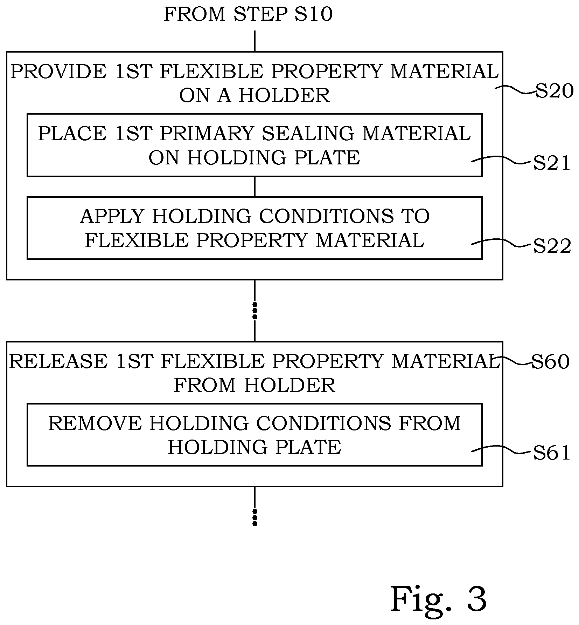

In one embodiment, as illustrated by Figure 3, the handling of the flexible property material is performed in that the step S20 of providing a first flexible property material on a holder comprises the part steps S21 and S22. In step S21, the first flexible property material is placed onto a holding plate. In step S22 a holding condition is applied to the flexible property material on the holding plate. The step S60 of releasing the first flexible property material from the holder consequently comprises the part step S61, in which the holding condition is removed from the holding plate.

The holding condition could be of different natures. One option is to use underpressure to suck the flexible property material against the holder. Another option is e.g. to apply static electricity to the holder, thereby exerting an attractive force on insulating flexible property material.

In an apparatus view, with reference to Figure 2, in one embodiment, the holder 22 is a holding plate, having a flat surface. The flat surface is provided with means for applying a holding condition to the flexible property material 3. The holder 22 further comprises control means arranged for operating the means for applying the holding condition to turn on and off the holding condition.

In a particular embodiment, where underpressure is used as the holding condition, the flat surface of the holder 22 is provided with a multitude of holes, as indicated in Figure 2. The holder 22 further comprising an underpressure generator (not shown) arranged for applying an underpressure to the multitude of holes. The holder further comprises a underpressure control means arranged for operating the underpressure generator to turn on an off the underpressure. The holder 22 is adapted for allowing the underpressure from the underpressure generator to be applied also when the holder 22 is transported on the panel transport means 60, at least between the flexible property material providing section 20 and a press section 40 (described further below). When the flexible property material 3 is to be released after the pressing, the underpressure is removed. A small overpressure could even be provided, which may facilitate the removal of the flexible property material 3 from the holder 22.

A small overpressure may also be useful in connection with the process of attaching the flexible property material 3 to the holder 22. Such a small overpressure will hold the flexible property material 3 "floating" above the surface of the holder 22, enabling any small corrections of the position of the flexible property material 3 by means of very small forces. This reduces the risks for damaging the flexible property material 3.

In Figure 2, a spacer application section 30 is illustrated. The spacer application section 30 configured for applying a spacer frame and primary sealing material onto a plane surface. This plane surface is either a surface of the element-surface panels 2 or a surface of the flexible property material 3 when attached to the holder 22. The details of this spacer application section 30 may be configured according to standard equipment used, as such, in IGU production lines of today. A person skilled in the art is therefore well-aware of how to provide such a spacer application section 30. The details are of no essential importance for the present ideas, as long as the spacer frame and primary sealing material are provided onto the surface.

A press section 40 is configured for pressing two plane surfaces together with the spacer frame and primary sealing material therebetween. A seal between the two surfaces is thereby created. Also, the press section 40 may be configured basically according to prior art knowledge, which is well-known by any person skilled in the art. Such press sections are for instance used already today in standard IGU production lines. However, some preferred embodiments, as is discussed further below, may involve specific modifications.

An edge sealing section 50 is configured for sealing an edge of an assembly unit by a secondary sealing material. Also, the edge sealing section 50 may be configured basically according to prior art knowledge, which is well-known by any person skilled in the art. Such edge sealing sections are for instance used already today in standard IGU production lines.

In some applications, the building element may comprise flexible property material that extends outside the spacer frame and the primary sealing material in the main plane of the building element. If the flexible property material or its functionality is sensitive to bending of the edges, the edge sealing section 50 is preferably arranged in such a way that the secondary sealing material is applied without causing any bending of the flexible property material, while still covering its edges.

Panel transport means 60 are configured for transporting rigid objects with plane surfaces between the panel providing section 10, the flexible property material providing section 20, the spacer application section 30, the press section 40 and the edge sealing section 50. The panel transport means 60 is thereby the part of the production line that is responsible for the transport of items between the different sections. This transportation can be performed using many different approaches, as such know in prior art. The details are not of essential importance for the present ideas, as long as they do not interfere with the processes within each individual section. The only important feature is that the panel transport means 60 should be suitable for transporting rigid objects with plane surfaces without any risk for damaging the structure of at least one and preferably both the surfaces. Different conveyor solutions are readily available within prior art.

It could also be noticed that when the holder 22, with a flexible property material attached thereto, is transported on the panel transport system, the attachment is to be secured. Preferably, the holding conditions of the holder 22 are maintained during the transport. If underpressure is used for attaching the flexible property material to the holder 22, the underpressure is maintained during all transportations and/or temporary storing of the holder 22.

The panel transport means 60 are configured for enable transport of panels, flexible property material, assembly units, i.e. partially assembled building elements, as well as the final building elements. There is preferably a general flow of items in a downstream direction S, i.e. from the material providing sections, such as the panel providing section 10 and/or the flexible property material providing section 20, towards the edge sealing section 60 and, if applicable, a heater section 70 (further discussed below). In other words, the panel transport means 60 should provide transportation in a downstream direction S. However, the panel transport means 60 should also allow transportation in an opposite direction, i.e. an upstream direction, at least between different selected sections, such as flexible property material providing section 20 and the press section 40.

In one preferred embodiment, the spacer application section 30 is positioned upstream of the press section 40 with respect of a main flow direction in the production line and the edge sealing section 50 is positioned downstream of the press section 40 with respect of the main flow direction in the production line.

In many building elements of today, volumes between different panels or foils within the building element are filled with a filling gas. This gas can be a protective gas for any functionality surfaces mitigating damages of any such surfaces. It may also be a gas having a low thermal conductivity, thereby lowing the total thermal conductivity across the building element. Typical gases used as filling gas may be dry nitrogen gas, carbon dioxide gas or inert gases. A preferred prerequisite is of course that the element-surface panels used have a permeability sufficient to maintain gas within the building element.

In prior art, any such filling of gas is typically performed as the very last step in a production line, at least if easily disrupted foils are used together with heat treatments. The heat treatment at the end of the process becomes necessary because the flexible property material cannot be stabilized and fixed inside the press with prior art methods. The application of spacer frames takes place outside the press. Escape holes are thus provided during heating, and after cooling-down, filling gas is entered, and the escape holes are sealed. Since the heating/cooling process typically is a time-consuming process, the throughput of the production line becomes low, or the gas-filling has to be performed in a separate production line, typically based on manual gas filling systems.

At the contrary, in the technology presented here, the processes for handling flexible property material are improved such that the assembly units as exiting the press section 40 are flat enough to be used for their intended purposes. The spacer frame is also here attached to the flexible property material outside the press, however, when the flexible property material is firmly held by the holder. Attachment of the flexible property material with the spacer frame is then attached to glass panes or assembly units inside the press. In case protective gases are used, this procedure allows for gas filling in the press process. As will be discussed further below, there are also preferred embodiments in which solutions of tightening flexible foils that do not cause damaging gas expansion within volumes of the building elements are presented. These improvements of the production line therefore open up for providing any filling gas earlier in the process, which typically improved the throughput.

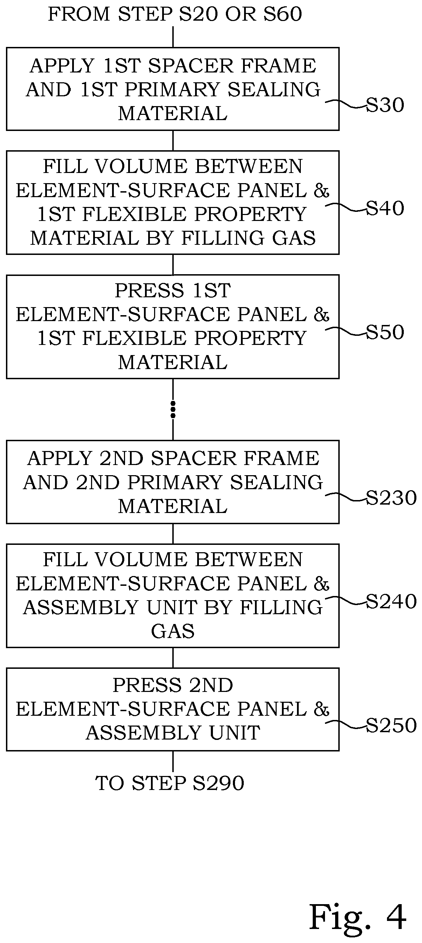

In one embodiment, filling of filling gas is provided in connection with the pressing. Additional steps of this embodiment are illustrated in Figure 4. To this end, in step S40, a volume between the first element-surface panel and the first flexible property material is filled with a filling gas. This is performed before or in conjunction with the step S50 of pressing the first element-surface panel and the first flexible property material together. Analogously, in step S240, a volume between the second element-surface panel and the flexible property material side of the assembly unit is filled with a filling gas. This is performed before or in conjunction with the step S250 of pressing the second element-surface panel and the assembly unit together. If the flexible property material is provided with escape holes, connecting the different volumes in the assembly unit, the filling can even be delayed until the second element-surface panel is attached.

In one embodiment, filling of gas is performed together with the actual pressing. When the two plane surfaces, intended to be pressed together, are moved towards each other, a laminar flow of the filling gas is provided in the volume between the surfaces. The laminar flow of filling gas will remove the air between the surfaces and when the surfaces come into mechanical contact, the volume between the surfaces is filled with the intended filling gas.

In alternative embodiments, the surfaces are placed in contact with each other except for a small inlet and a small outlet. Filling gas can then be streamed into the inlet, pushing air out through the outlet. When the volume between the surfaces is filled with the filling gas, the inlet and outlet are removed, and the final part of the pressing is performed.

In an apparatus view, with respect to Figure 2, the press section 40 is further configured for filling a volume between the two plane surfaces with a filling gas.

In one embodiment, nozzles for filling gas are provided in the floor of the press section 40, arranged for creating a laminar flow of filling gas between element-surface panels/flexible property material during the pressing process. In alternative embodiments, nozzles can be provided at the sides and/or at the top as complements or alternatives to the floor nozzles.

The present ideas make it possible to produce multi-layer building elements with one or more flexible property material as inner layers, possibly with gas between the inner layers and between the inner layers and the element-surface panels. Examples of feasible such flexible property material are polymer film, ultrathin glass, metal foils and fabrics. The polymer films can be of various kinds. Examples of such candidates are a polyetentereftalat (PET) film, a polyethylene naphthalate (PEN) film, an acrylate film and a polycarbonate film. PET films are already today used as intermediate films in laminated glass panes or in IGUs. PET is known to have a shrinkage upon heat exposure, which has been used for stretching the PET films. PEN films are today less common, but present similar properties. Acrylate films, including polyacrylate films, as well as polycarbonate are also interesting substrate materials for certain active film functionalities.

In some embodiments, the flexible property material comprises an ultrathin glass pane. According to some definitions, ultrathin glass comprises glass panes thinner than 3 mm. At a first glance, a glass pane with the thickness of 3 mm may appear to be relatively rigid. However, for large-area glass panes, thicknesses of less than 3 mm cause the glass pane to behave in a flexible, non-rigid manner and has typically difficulties to bear its own weight without risk for breaking. For even thinner glass panes, e.g. thinner than 1 mm, the flexible behaviour becomes even more pronounced. In one embodiment, the flexible property material comprises an ultrathin glass pane of a thickness less than 1 mm.

Fabrics of different kinds are becoming more and more frequent in building elements. Recyclable materials, e.g. based on plant fibers, may be used for mitigating air flows within an opaque building element
The type of flexible property material is preferably selected based on the functionality that the flexible property material is intended to have. If the intension is to use the building element as a window, having transparent element-surface panels, the flexible property material is consequently also selected to be at least partly transparent.

In building elements that are not used in window applications, it is common that at least one of the first and second element-surface panel is an opaque panel. In one particular embodiment, the opaque panel is a fiber reinforced gypsum panel. In such embodiments, the panel providing section is configured for supplying opaque element-surface panels, and in a particular embodiment, the opaque panel is a fiber reinforced gypsum panel.

In non-window applications, flexible property material in the form of fabrics may advantageously be used for reducing gas convection streams and/or IR reflection within the building element, thereby reducing the overall thermal conductivity and U-value therethrough. Metal foils may also be used, e.g. for providing heat conduction channels that may be used for heating or cooling purposes. Metal foils may also be used e.g. for screening of electromagnetic radiation and have low-emission properties.

In most applications involving opaque element-surface panels, the degree of smoothness of the flexible property material is not of particular importance. The shape in which the flexible property material is pressed into the assembly unit may therefore be acceptable and no further treatment is necessary.

If the flexible property material is intended to have a certain functionality and in particular if the element-surface panels are transparent, it is often required that the attached flexible property material has a certain flatness. This is often the case in IGUs.

In other words, in one embodiment, at least one of the first and second element-surface panel is a transparent panel. In a further embodiment, the at least one of the first and second element-surface panel is a glass pane. Typically in such embodiments, the building element is an insulated glass unit (IGU).

The above presented approach using a holder, on which the flexible property material is releasably attached during the application of the frame and the primary sealing and during the pressing, has proven to give very flat flexible property materials in the assembly unit. Therefore, in many applications, any post-stretching of the flexible property material is unnecessary, even for e.g. IGUs.

However, there may still be certain applications, in which an extreme flatness of the flexible property material is necessary to ensure a proper function. In such embodiments, a post-attachment stretching of the flexible property material has to be employed. Different polymer foils are known to shrink when they are exposed for heat. PET is one typical such polymer foil.

In prior art, an entire IGU is typically introduced into a heating oven and heated to 100-160°C. The polymer film, e.g. the PET, shrinks, which means that the flexible property material is stretched into a very flat condition. A disadvantage with this procedure is that if the volumes within the IGU are sealed completely, the gas within the volumes will also become heated and the gas pressure increases. Such increased gas pressure may easily damage the elements used for building purposes. It is therefore necessary to have evacuation openings into the internal volumes of the IGU during heating. After heating and cooling down, gas has to be filled, if applicable, and the volumes have to be finally sealed. This process is time consuming, typically several hours, and requires many part processes to be completed. The long process time and the restricted possibilities for quality control during the process for the heating and cooling makes this approach unsuitable to be used in a fullyautomated production line.

In the framework of the present technology, in a preferred embodiment, if stretching of flexible property material is to be performed, a new type of heating procedure is developed, which fits perfectly into the overall approach.

With reference to Figure 2, in this embodiment, the panel providing section 10 is configured for supplying transparent element-surface panels, typically glass panes. Also, the flexible property material providing section 20 is configured to handle polymer films, e.g. PET films. In this embodiment, the production line 1 further comprises a heater section 70. This heater section 70 is configured for heating polymer films in building elements with element-surface panels on both outer surfaces, while keeping heating of the element-surface panels and the gas between the element-surface panels and the polymer films low. The heater section 70 is preferably positioned downstream of the edge sealing section 50, with respect of a main flow direction S in the production line 1. Alternatively, the heater section 70 can be considered as a separate sequence after the secondary seal has cured.

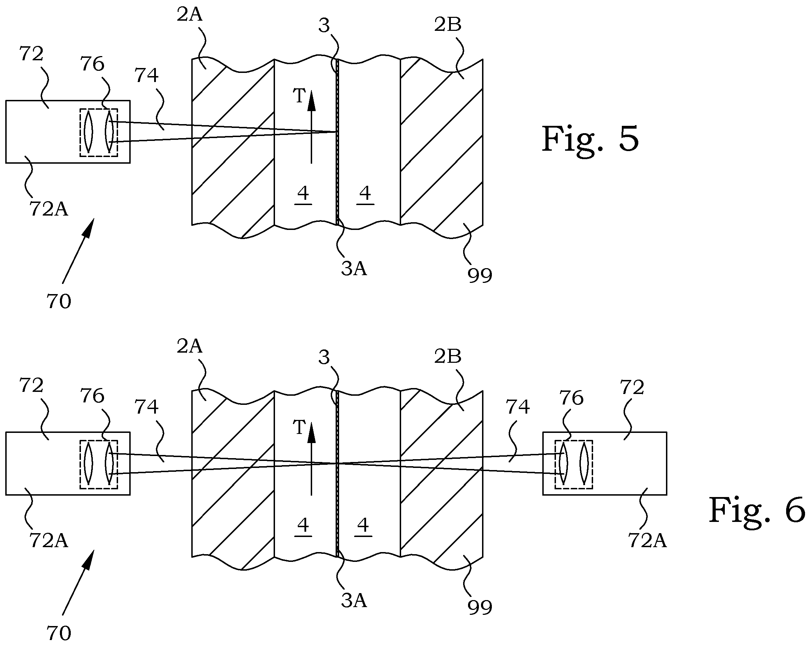

Figure 5 illustrates schematically an embodiment of heating of polymer films within a building element, such as an IGU. The building element 99, in this example an IGU, comprises in this embodiment a first and second element-surface panels 2A, 2B. Between the first and second element-surface panels 2A, 2B, a flexible property material 3, here in the form of a polymer film 3A is positioned. Gas 4 fills the volumes between the first and second element-surface panels 2A, 2B and the polymer film 3A.

An electromagnetic radiation source 72, in this embodiment a UV source 72A provides a beam of electromagnetic radiation 74. The beam of electromagnetic radiation 74 is directed through the first element-surface panel 2A to the polymer film 3A. Preferably, as illustrated in this embodiment, the beam of electromagnetic radiation 74 is focused on a point or line at a distance essentially coinciding with the distance to the polymer film 3A. In other words, in this embodiment, the heater section further comprises an optical lens arrangement 76 arranged for focusing electromagnetic radiation 74 from the electromagnetic radiation source 72 on or in a vicinity of a polymer film 3A in the building element 99. Alternatively, the electromagnetic radiation source 72 may also by the construction of the source itself present a focusing effect. The focus is preferably a line focus, perpendicular to the plane of the paper in the figure. The focused electromagnetic radiation 74 causes a local heating of the polymer film 3A. This local heating induces a shrinkage of the polymer film 3A. The beam of electromagnetic radiation 74 is scanned over the surface of the building element 99 in the direction illustrated as T. Thereby, each point at the polymer film 3A is irradiated and exposed for the shrinkage.

In other words, in one embodiment, the heater section comprises an electromagnetic radiation source 72 arranged for scanning polymer films 3A of the building element 99 by electromagnetic radiation through a transparent one of the element-surface panels 2A, 2B.

It has been found that this scanned heating will give essentially the same shrinkage properties as a conventional oven heating process. The focused beam of electromagnetic radiation 74 is at each moment heating a small part of the polymer film 3A, causing a local high temperature increase due to the light absorption. Some of the light will also be absorbed in the first element-surface panel 2A. However, this absorption is spread over a larger area, and since the first element-surface panel 2A has a considerably higher mass to heat, the temperature increase at the first element-surface panel 2A will be considerably lower than for the polymer film 3A. In a preferred embodiment, an area mass of the transparent one of the first and second element-surface panels is at least 10 times larger than an areas mass of the polymer film.

As indicated above, a focusing of the beam of electromagnetic radiation 74 is preferable and provides a concentrated energy transfer to the polymer film 3A. However, it has been found that also an unfocused beam of electromagnetic radiation 74 indeed will give a useful shrinkage effect. This may then also be further enhanced by the above-mentioned mass-ratio conditions or selection of suitable wavelengths, as discussed further below.

In order to further increase the difference in temperature changes in the polymer film 3A versus the first element-surface panel 2A, an electromagnetic radiation having a large absorption coefficient in the polymer film 3A and a small absorption coefficient in the element-surface panel 2A. Treatment of films with low-emission coating, UV stabilizers etc. can be used to shift the absorption ratio in favorable direction.

The gas 4 that is present between the element-surface panel 2A and the polymer film 3A will also be heated. However, the gas has a considerably lower absorption coefficient than the solid materials, which results in that the main heating of the gas comes from heat conduction from the surface of the polymer film 3A and the element-surface panel 2A, respectively. However, such heat conduction is small and the average temperature of the gas 4 will not change very much at all. Consequently, any pressure increase of the gas 4 during the heating procedure will be very small indeed. The integrity of the polymer film 3A and the element-surface panel 2A will therefore not be affected. Since the ambition of the operation is heating of the foil, additional measures can be taken by cooling the glass surface while the PET surface remains heated.

Glass panes are known to absorb UV light quite efficiently. It was therefore very surprising when it was found that UV light in fact is one of the most promising types of electromagnetic radiation used for this purpose. The UV light that manages to pass the element-surface panel 2A was anyway sufficient to cause a temperature increase in the polymer film 3A that was sufficient for causing local shrinking. In one embodiment, any kind of UV light, UV-A, UV-B or UV-C was used, in a wavelength range of 200 - 400 nm, at least for some glass qualities. Preferably UV-B or UV-A was used, in a wavelength range of 280-400 nm. Most preferably, UV-A radiation is used, in the wavelength range of 310-400 nm. At least UV-A and to a certain extent also UV-B is possible to use for most glass qualities.

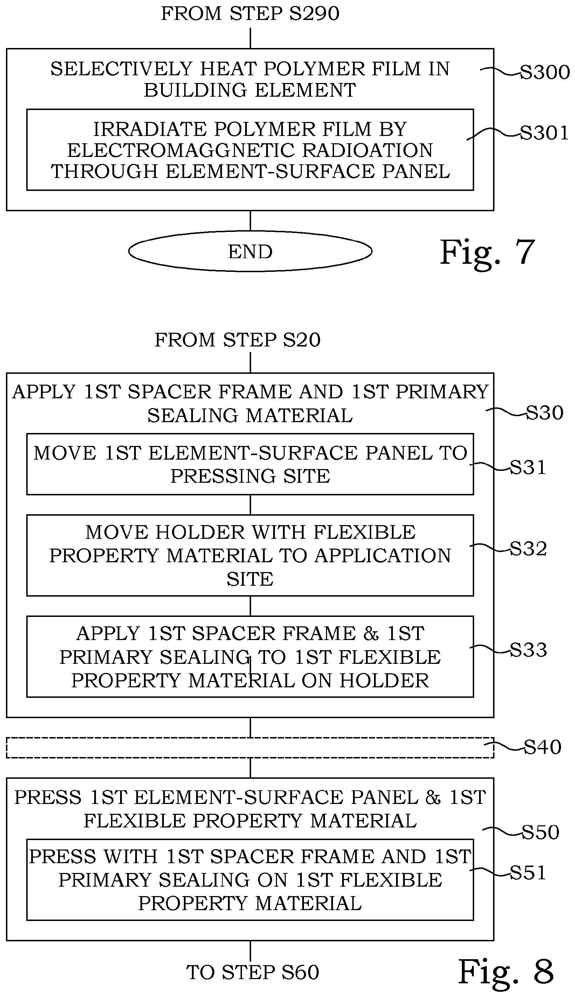

In a corresponding method, as illustrated in Figure 7, the method of manufacturing building elements comprises the further step S300 of selectively heating a polymer film in the building element after the building element has been provided with element-surface panels on both outer surfaces, while keeping heating of the first and second element-surface panels as well as of any gas between the element-surface panels and the polymer film low. In other words, the heating of the first and second element-surface panels is limited compared to the heating of the polymer film in the building element. Preferably, the step S300 of heating PET film(s) in the building element is performed after the step S290 of sealing an edge of the assembly unit.

In one embodiment, the step S300 of heating a polymer film in the building element comprises the step S301, in which the polymer film is irradiated by electromagnetic radiation through a transparent one of the first and second element-surface panels. In one embodiment, the electromagnetic radiation has wavelengths in the range of 200-400 nm, preferably 280-400 nm, and most preferably 310-400 nm.

Preferably, an area mass of the transparent one of the first and second element-surface panels is at least 10 times larger than an areas mass of the polymer film, preferably ate least 25 times larger, and most preferably at least 100 times larger. The area mass is defined as the mass of 1 m² of the pane or foil, respectively.

Tests have been performed. In one typical test, a set-up comprising a target having a 4 mm glass pane in front of a 0.05 mm PET foil was used. The start temperature was 20°C. The total mass of the glass pane was 10 kg, whereas the mass of the PET foil was 0.07 kg. The area size of the glass pane and PET foil, respectively, was 1 m², which means that the area mass of the glass pane was 10 kg/m² and the area mass of the PET foil was 0.07 kg/m². UV radiation with a wavelength of 310 nm and a power of 224 W was used to irradiate the test set-up, by scanning the light over the test set-up area during 180 s. The scanning was performed by moving the test set-up in front of the radiation source. The absorption in the glass pane was estimated to 60%, while the absorption in the PET was almost 100%. After the irradiation, the temperature in the glass was 32°C. However, the temperature in the PET foil was 110°C just after the irradiation. The temperature increase of the bulk gas between the glass pane and the PET foil was negligible. A temperature-increase in the gas in direct contact with the glass pane or the PET foil is expected, but no reliable measurements thereof could be obtained. However, the overall gas temperature increase did not cause any significant increase of the gas pressure.

These tests have demonstrated that a polymer foil can be heated through glass panes by means of electromagnetic radiation to temperatures that creates shrinkage. Thereby, an in-place stretching of the polymer films can be performed. Furthermore, the corresponding heating of the gas within the building element is very small and there is no risk for causing damages due to increased internal gas pressure. Moreover, the temperature increase of the glass panes is moderate, allowing for handling of the building elements directly after the exposure, without any burning hazards. The exposure times used were also very limited, typically a few minutes per square meter of an IGU. This property makes this approach very suitable to be incorporated in an automated production line of IGUs.

Figure 6 illustrates schematically another embodiment of a heater solution. In this embodiment, the electromagnetic radiation is supplied from both sides. This, of course, requires that both element-surface panels are transparent. By supplying a part of the total radiation, preferably half of it, through each glass pane, the temperature increase in the glass panes becomes even smaller. This is obtained while the amount of radiation power reaching the polymer film is unchanged, giving the same heating effect as before.

In the embodiment of Figure 2, the flexible property material providing section 20 is positioned upstream of the press section 40, with respect of the main flow direction in the production line S. This makes it favourable to first move the first element-surface panel from the panel providing section 10 to the press section 40 and then move the holder with the flexible property material on it to the spacer application section 30. When the spacer and seal is applied onto the flexible property material, the holder and the flexible property material is transported to the press section 40 to be pressed together with the first element-surface panel.

In the embodiment of Figure 2, the flexible property material providing section 20 is placed upstream of the spacer application section 30. However, in alternative embodiments, the flexible property material providing section 20 may instead be placed between the spacer application section 30 and the press section 40.

In further other embodiments, the flexible property material providing section 20 may be placed upstream of the panel providing section 10. In such a case, arrangements for allowing the holder 22 to pass the panel providing section 10 have to be provided by the panel transport means 60.

For a three-layer building element, the second element-surface panel is moved to the spacer application section 30. At the spacer application section 30, a second spacer frame and a second primary sealing is provided onto the second element-surface panel. The second element-surface panel is then moved to the press section 40, in which it is attached to the waiting assembly unit comprising the first element-surface panel and the flexible property material.

Figure 8 is a part flow diagram illustrating some steps of an embodiment according to these ideas. The step S30, of applying a first spacer frame and a first primary sealing material, comprises the part steps S31-S33. In step S31, the first element-surface panel is moved to a pressing site. In step S32, the holder with the flexible property material on it is moved into a site intended for application of a spacer and a primary seal. In step S33, the first spacer frame and the first primary sealing material is applied onto the first flexible property material on the holder. The step S50, of pressing said second element-surface panel and said assembly unit together comprises in this embodiment the step S51. In step S51, the first spacer frame and the first primary sealing material as applied to the first flexible property material on the holder is pressing against the first element-surface panel.

The above embodiment is presently considered as a preferred embodiment for flexible property materials, for which there are negligible risks for damaging actions during application of spacer frames and seals when it is held by the holder.

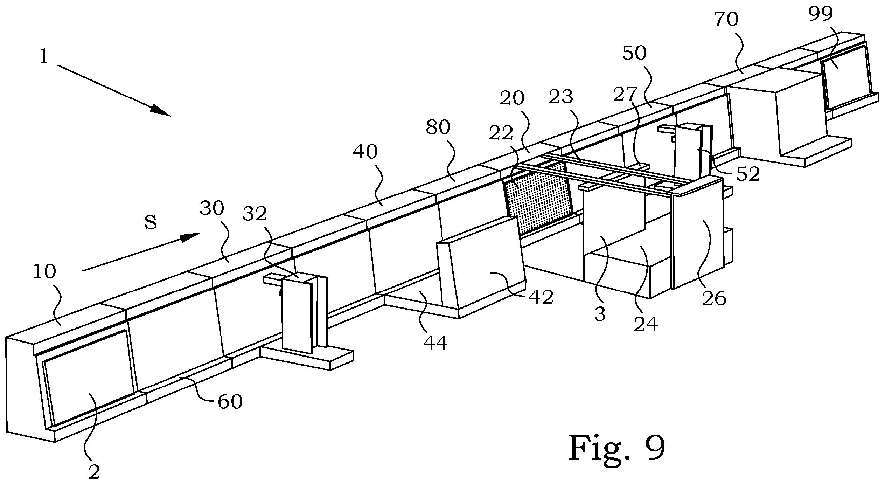

However, for certain flexible property materials, e.g. where the surface is extremely sensitive to mechanical contacting, it may be safer to perform the actual contacting between the spacer frames and seals and the flexible property material in connection with the actual pressing action. Figure 9 is a schematic illustration of another embodiment of a production line 1 for manufacturing of building elements. Most parts are similar to the ones illustrated in Figure 2 and will not be discussed again. In the embodiment of Figure 9, the flexible property material providing section 20 is positioned downstream of the press section 40, with respect of a main flow direction S in the production line 1. The production line 1 further comprises a rest section 80 positioned between the flexible property material providing section 20 and the press section 40. At the rest section 80, a rigid object may temporarily be stored. The panel transport means 60 is in this embodiment configured to transport the rigid objects in both directions at least between the flexible property material providing section 20 and the spacer application section 30.

This configuration makes it favourable to first move the holder with the flexible property material on it from the flexible property material providing section 20 to the press section 40. The flexible property material is contacted to one support part of the press section 40 and handed over by releasing the flexible property material from the holder 22. The first element-surface panel is moved from the panel providing section 10 to the spacer application section 30. When the spacer and seal is applied onto the first element-surface panel, the first element-surface panel is transported to the press section 40 to be pressed together with the waiting flexible property material.

For a three-layer building element, the assembly unit comprising the first element-surface panel and the flexible property material is moved to the spacer application section 30. At the spacer application section 30, a second spacer frame and a second primary sealing is provided onto the flexible property material of the assembly unit. The assembly unit is then moved to the rest section 80. This allows for the second element-surface panel to be moved to the press section 40. The support part of the press section 40 is connected to the second element-surface panel. This allows for the resting assembly unit to be introduced into the press section 40, in which the assembly unit comprising the first element-surface panel and the flexible property material is attached to the waiting second element-surface panel.

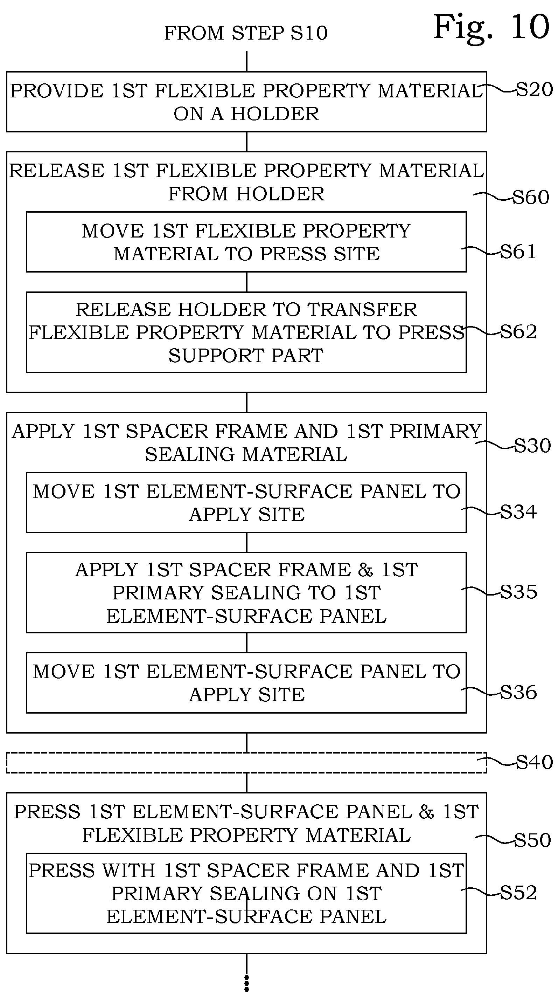

Figure 10 is a part flow diagram illustrating some steps of an embodiment of a method according to these ideas. The step S60 of releasing said first flexible property material from said holder is moved to occur after step S20 of providing a first flexible property material on a holder. Step S60 comprises in this embodiment the part steps S61 and S62. In step S61, the holder with the flexible property material on it is moved into a pressing site and is contacted with a support part of the pressing section. In step S62, the holder is released from the first flexible property material, leaving the flexible property material at the support part of the pressing section. S30, of applying a first spacer frame and a first primary sealing material, comprises in this embodiment the part steps S34-S34. In step S34, the first element-surface panel is moved to a site intended for application of a spacer and a primary seal. In step S35, the first spacer frame and the first primary sealing material is applied onto the first element-surface panel. In step S36, the first element-surface panel is moved into a pressing site. The step S50, of pressing said second element-surface panel and said assembly unit together comprises in this embodiment the step S52. In step S52, the first spacer frame and the first primary sealing material as applied to the first element-surface panel is pressed against the first flexible property material.

In the discussion here above, production of three-layer building elements is described. However, the production line and the methods therefore may also be used for production of building elements of more than three layers. As will be discussed further below, more than one intermediate layer in a building element may be of benefit. This may e.g. enable combinations of different functionalities or simply a multiple effect of a single functionality.

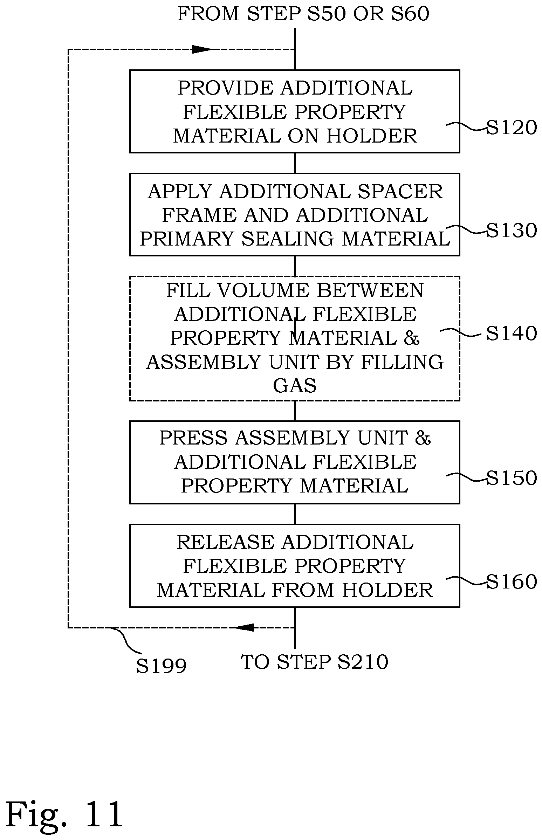

Figure 11 illustrates a part flow diagram for a method for producing multilayer building elements. In step S120, an additional flexible property material is provided on the holder. This additional flexible property material can be of a same type as the first additional flexible property material or of another type or with another functionality.

In step S130, an additional spacer frame and an additional primary sealing material is applied between a first side of the additional flexible property material and a flexible property material side of the assembly unit. In one embodiment, for instance if the configuration of the production line is according to Figure 2, this step typically comprises to move the holder with the additional flexible property material on it to a site intended for application of a spacer frame and an additional primary sealing. The spacer frame and the additional primary sealing is then applied onto the additional flexible property material as being held by the holder. The holder with the additional flexible property material on it is then moved to the pressing site.

In embodiments where filling gas is used in the building element, step S140 is performed, in which a volume between the additional flexible property material and the flexible property material side of the assembly unit is filled with a filling gas. This is performed before or in connection with the pressing, see below.

In step S150, the additional flexible property material and the first flexible property material are pressed together, thereby creating a seal therebetween comprising the additional spacer frame. The assembly unit is by this provided with the additional flexible property material. In embodiments, where the additional spacer frame and the additional primary sealing are provided at the additional flexible property material, step S150 also comprises that the additional spacer frame and the additional primary sealing material as applied to the additional flexible property material on the holder is pressed against the assembly unit.

In step S160, the additional flexible property material is released from the holder.

In some embodiments, for instance when using e.g. a production line according to Figure 9, the step S160 is performed before step S130, and comprises moving the assembly unit to the site intended for application of a spacer frame and an additional primary sealing. The holder with the additional flexible property material on it is then moved into the pressing site and is contacted with a support part of the pressing section. The holder is then released from the additional flexible property material, leaving the flexible property material at the support part of the pressing section. Step S130 then typically comprises applying the additional spacer frame and the additional primary sealing material onto the assembly unit. The assembly unit is then moved into a pressing site. Step S150 then also comprises that the additional spacer frame and the additional primary sealing material as applied to the assembly unit is pressed against the additional flexible property material.

The steps S120 to S160 may then be repeated, as indicated by the dotted line S199, adding one flexible property material at a time until the total number of intermediate layers in the building element is reached.

If multi-layer building elements are to be produced, having intermediate layers that need to be stretched into a flat shape, the above presented approach for heating be electromagnetic radiation may in some cases be modified.

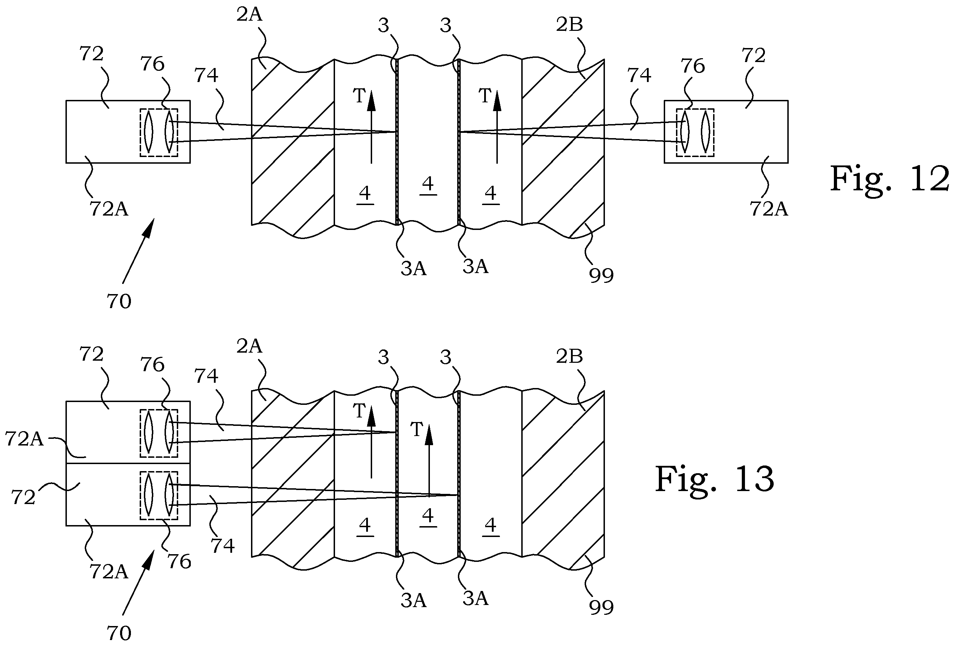

If both element-surface panels are transparent, a configuration as is schematically illustrated in Fig. 12 can be used. This configuration is almost the same as in Figure 6, with the difference that the two radiation sources are focused on one polymer film each.

If only one element-surface panel is transparent or if the irradiation only can be performed from one side, there are some different alternatives. One possibility is to find a wavelength of the radiation that is not completely absorbed by the first polymer foil. Some radiation energy will then be transmitted and will reach the second polymer foil. In order to obtain appropriate temperature increases in both polymer foils in a same scanning, one may also re-focus the irradiation equipment to obtain a focal point or line between the polymer foils, and preferably closer to the second polymer foil.

Another possibility is to scan the IGU twice, where the target for the heating action is one foil at a time. In order to obtain a good result, the applied wavelength and/or focus length may have to be adapted between the scans. This approach can also be performed by two radiation sources provided besides each other, as is schematically illustrated in figure 13. Each radiation source can then be adapted for an optimum heating result of one polymer foil each. The two radiation sources may be scanned in conjunction to each other, or they can be scanned with a certain time difference, e.g. for allowing temperature equalization in the different parts of the IGU.

As mentioned above, the possibility to efficiently build building elements with one or several intermediate layers makes it easier to combine different foilbased functionalities. Basic properties of an insulation glass unit are typically insulation capabilities, i.e. U-value, light transmission and sun blocking capabilities. i.e. G-value. A traditional insulation glass is thus a transparent insulating element covering the basic properties. These basic properties may be influenced by covering the inside glass surfaces with e.g. low e-coatings and/or solar coatings. Additional functionality can be provided by laminating additional glass on inner or outer surfaces. However, this adds considerable weight to the units and increases also the CO₂ foot print, since only one side of the glass pane typically is used for e.g. sputter coverages.

Since many functionalities are provided at surfaces of panes or foils, a multilayer building element according to the above ideas offers many possibilities for providing the different functionalities. Both the surfaces of the flexible property material as well as at least the inner surfaces of the element-surface panels are possible candidates for functionality coatings. A hybrid insulation glass can be defined to be a technology carrier with multiple surfaces available to carry other technologies, in addition to providing for the basic properties. A hybrid insulation glass thus changes the concept from primarily being an insulation element into being a carrier of various technological functionalities that also may be used for insulation purposes. With hybrid insulation glass units, both sides of all intermediate foils as well as the volume between such foils can be used as a functional unit. The increase of the available application surfaces for different functionalities increase the possibilities to utilize synergetic combinations. In prior art, the only combination of functionalities made so far is the combination of one functional film and a low e-coating.

With the above presented ideas, new ways of designing diversity-functioning glass units are opened. An application-based composition (ABC) can be defined as a unit combining two or more functions to increase and/or optimize functions of construction elements, such as windows with no added weight or CO₂ footprint. Building elements may be optimized in certain respects to fulfil different need for, e.g. light properties, power need, ventilation, heating, growth greenhouse, daylight, privacy etc.

If the functionality coatings are resistant to wear, humidity and/or chemical reactions with gases in the environment, also the outer surfaces of the element-surface panels are possible to use. In other words, in one embodiment, two or more different added functionalities are provided at respective surfaces of the flexible property material and/or the element-surface panels.

Transparent element-surface panels and/or the flexible property material may thus have an added functionality. In one embodiment, such functionality is selected from:
a switchable technology, preferably selected from electrochromic (EC), thermochromic (TC), photochromic (PC), suspended particle devices (SPD), polymer dispersed liquid crystals (PDLC), liquid crystal devices (LCD);
solar cells;
Quantum dots (QD);
alarms;
sensors;
displays;
anti-bacterial;
anti-microbial;
air cleaning;
photo-catalytic;
low-emission;
anti-reflection treatment;
antenna;
bird safe films; and
ultraviolet (UV)-block.

Many switchable technologies are already today based on applications on surfaces. EC, TC, PC, SPD, PDLC, and LCD are typical examples of technologies that are easily provided as films on different kinds of substrates, e.g. polymers. Such devices can thereby be easily introduced into the interior of an insulation glass unit, provided a variety of functionalities, alone or in combination. Solar cells may also be integrated, providing an independent source of energy for other functionalities as well as for external use. Alarms and sensors, responding to movements, or changes in environmental conditions, may also be provided at thin polymer films and may therefore be integrated into an insulating glass unit. Anti-bacterial, anti-microbial, air cleaning or photo-catalytic functionalities may be provided at the outer sides of the glass panes, if there is a need for such functionalities in the environment. If the building elements allow for exchange or flow of gas between the different layers, such layers can also be provided within the building element. Antennas are also plausible to implement within the different layers of an insulating glass unit, reducing the need for external antenna structures. The possibilities for functionalities and combinations thereof are unlimited.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

## Claims

1. A method of manufacturing an insulated glass unit, comprising the steps of:
- providing a building element (99) comprising a polymer film (3A), a first element-surface panel (2A) and a second element-surface panel (2B), wherein said polymer film (3A) is positioned between the first element-surface panel (2A) and the second element-surface panel (2B); and
- heating (S300) said polymer film (3A) in said building element by irradiating (S301) said building element (99) by electromagnetic radiation (74) through said first element-surface panel (2A), thereby inducing a shrinkage of said at least one polymer film (3A).

2. The method according to claim 1, **characterized in that** said step of providing a building element (99) comprises providing at least one of said first element-surface panel (2A) and said second element-surface panel (2B) as a glass pane;
wherein said polymer film (3A) is held in a sealed volume by said first element-surface panel (2A) and said second element-surface panel (2B), wherein said at least one polymer film (3A) distanced from said first element-surface panel (2A) and said second element-surface panel (2B) by spacer frames;

3. The method according to claim 1 or 2, **characterized in that** said providing of a building element comprises providing a building element (99) having volumes between said polymer film (3A) and said first and second element-surface panel (2A, 2B), respectively, filled with a filling gas (4).

4. The method according to any one of the claims 1 to 3, **characterized in that** said irradiating (S301) of said building element (99) comprises irradiating said electromagnetic radiation (74) on a point or line on said polymer film (3A).

5. The method according to any one of the claims 1 to 4, **characterized in that** said irradiating (S301) of said building element (99) comprises scanning said electromagnetic radiation (74) over the surface of the glass pane.

6. The method according to any one of the claims 1 to 5, **characterized in that** an absorption coefficient of said electromagnetic radiation in said glass pane is smaller than absorption coefficient of said electromagnetic radiation in said polymer film.

7. The method according to any one of the claims 1 to 6, **characterized in that** said electromagnetic radiation is ultra-violet radiation, preferably having wavelengths in the range of 200-400 nm, preferably in the range of 280-400 nm and most preferably in the range of 310-400 nm.

8. The method according to any one of the claims 1 to 7, **characterized in that** an area mass of said glass pane is at least 10 times larger than an areas mass of said polymer film.

9. The method according to any one of the claims 1 to 8, **characterized in that** said building element (99) comprises a plurality of polymer films (3A), wherein said irradiating (S301) of said building element (99) comprises irradiating said plurality of polymer films (3A).

10. The method according to claim 9, **characterized in that** said irradiating (S301) of said building element (99) comprises adapting said irradiating (S301) for each polymer film of said plurality of polymer films (3A).

11. The method according to any one of the claims 1 to 10, **characterized in that** both said first element-surface panel and said second element-surface panel are glass panes, wherein said irradiating (S301) of said building element (99) by electromagnetic radiation is performed through both said glass panes.

12. A heater section (70) for production of insulated glass units, said heater section (70) being configured for heating a polymer film (3A) held in between a first element-surface panel (2A) and a second element-surface panel (2B) in a building element (99), **characterized by** an electromagnetic radiation source (72) arranged for irradiating said polymer film (3A) of said building element (99) by electromagnetic radiation (74) through said first element-surface panel (2A).

13. The heater section according to claim 12, **characterized in that** said polymer film (3A) is distanced from said first element-surface panel (2A) and said second element-surface panel (2B) by spacer frames, wherein at least one of said first element-surface panel (2A) and said second element-surface panel (2B) is a glass pane.

14. The heater section according to claim 12 or 13, **characterized in that** said electromagnetic radiation source (72) comprises means for scanning said electromagnetic radiation (74) over the surface of said first element-surface panel (2A).

15. The heater section according to any one of the claims 12 to 14, **characterized in that** said electromagnetic radiation source (72) is an ultraviolet source (72A), preferably having wavelengths in the range of 200-400 nm, preferably in the range of 280-400 nm, and most preferably in the range of 310-400 nm.

16. The heater section according to any one of the claims 12 to 15, **characterized by** comprising two said electromagnetic radiation sources (72) configured for irradiating said at least one polymer (3A) from a same side or from different sides.

17. A production line for manufacturing insulated glass units, **characterized by** comprising a heater section according to any of the claims 12 to 16.

18. The production line according to claim 17, **characterized by** further comprising:
- a building element providing section, configured for providing a building element comprising at least one polymer film, a first element-surface panel and a second element-surface panel;
wherein at least one of said first element-surface panel and said second element-surface panel is a glass pane;
- wherein said at least one polymer film is held in a sealed volume by said first element-surface panel and said second element-surface panel, distanced from said first element-surface panel and said second element-surface panel by spacer frames.
